Europäisches Patentamt

**European Patent Office**

**Office européen des brevets**

(11) Numéro de publication: **0 044 242**
**B1**

(19)

# (12) FASCICULE DE BREVET EUROPEEN

(45) Date de publication du fascicule du brevet:
**11.01.84**

(21) Numéro de dépôt: **81401054.2**

(22) Date de dépôt: **01.07.81**

(51) Int. Cl.³: **G 11 B 17/02,** G 11 B 23/02

(54) Dispositif de prise pour cartouche de disque magnétique.

(30) Priorité: **16.07.80 FR 8015687**

(43) Date de publication de la demande:
**20.01.82 Bulletin 82/3**

(45) Mention de la délivrance du brevet:
**11.01.84 Bulletin 84/2**

(84) Etats contractants désignés:
**BE DE GB NL**

(56) Documents cités:
**FR - A - 2 035 681**
**FR - A - 2 108 543**
**FR - A - 2 173 085**
**FR - A - 2 444 315**
**US - A - 4 071 862**

(73) Titulaire: **GEFITEC S.A., Avenue de la Gare, 5 Case postale 452, CH-1001 Lausanne 1 (CH)**

(72) Inventeur: **Posso, Patrick, 10, Avenue Jurigoz, CH-1006 Lausanne (CH)**

(74) Mandataire: **Caunet, Jean et al, Cabinet BEAU DE LOMENIE 55, rue d'Amsterdam, F-75008 Paris (FR)**

BUNDESDRUCKEREI BERLIN

## Dispositif de prise pour cartouche de disque magnétique

Les disques magnétiques pour ordinateurs sont conditionnés dans la cavité interne d'un boitier fermé par un couvercle et la cartouche ainsi constituée est connue sous le nom de disk-pack. Le disque est emprisonné entre un plateau de serrage et un plateau de verrouillage coopérant avec des aimants permanents portés par le fond du boîtier. Dans la chambre ménagée entre ces deux plateaux est logé, avec un jeu axial suffisant, un plateau extracteur qui, lorsqu'il est rapproché du couvercle, provoque la désolidarisation du plateau de verrouillage relativement aux aimants permanents et permet, lorsque ce couvercle est manoeuvré au moyen d'une poignée, d'extraire le disque avec ledit couvercle.

La présente invention concerne justement des perfectionnements apportés au dispositif de prise de la cartouche grâce auquel les opérations précitées peuvent être effectuées automatiquement de l'extérieur.

Un tel dispositif de prise peut comporter un mécanisme comprenant une pièce attelée par au moins une tige au plateau extracteur et montée pivotante dans la poignée à laquelle elle est susceptible d'être reliée, pour extraire le disque, par une gâchette montée coulissante dans ladite poignée et permettant de mettre ledit mécanisme en position d'escamotage ou en position de préhension ainsi qu'il est décrit dans le document FR-A-2 035 681.

La présente invention a pour but, tout en permettant l'exécution des deux opérations de prise de la cartouche dans son ensemble et de prise du disque suspendu au couvercle après séparation du boitier, de rendre le démontage et le remontage du dispositif de prise très rapides et très commodes pour n'importe qui et sans l'aide d'aucun outil, tout en assurant une solidité, une sécurité et une fiabilité pratiquement parfaites de ce dispositif. Subsidiaorement, elle vise une simplification de la conception telle que le nombre de pièces composantes se trouve réduit et que la plupart d'entre elles, et notamment celles dont la forme est complexe en raison de la multiplicité et de la dépendance des fonctions qu'elles remplissent, puissent être fabriquées en matière plastique sans difficultés particulières et avec précision, ce qui permet évidemment une fabrication de série automatisée dont les opérations de montage manuel sont réduites tant en importance et habilité qu'en durée, fabrication qui conduit alors à une réduction sensible du prix de revient et à une homogénéité dans la qualité des cartouches ainsi produites.

Pour atteindre ce but et conformément à l'invention, la pièce précitée est basculante et en appui élastique sur le couvercle contre lequel elle repose librement par l'une de ses faces dans la position fermée de portage et par son chant arrondi formant pivot coulissant dans la position ouverte d'extraction, la poignée ne s'appuyant pas sur ledit couvercle; la ou chacune des tiges guidée en translation sensiblement coaxiale à travers le couvercle présente en saillie latérale au moins un axe situé au-dessus de ce couvercle et dans un logement ménagé dans la pièce basculante en débouchant dans une fente de celle-ci prévue pour le libre débattement relatif de la tige considérée lors du basculement de ladite pièce; le logement présente une partie sensiblement perpendiculaire à la face d'appui de la pièce basculante et prolongée par un retour en forme de crochet dont le fond extrême constitue un pallier ouvert pour l'axe de tige considéré, la distance au chant arrondi de la surface de contact du palier opposée étant supérieure à la distance à la face d'appui de la surface de contact du palier opposée d'une grandeur suffisante pour décoller le plateau de verrouillage relativement au ou aux aimants; et au moins un ressort interposé entre le couvercle et le plateau extracteur pour tendre à les écarter, maintient élastiquement le ou les axes de tige dans le ou les paliers précités de la pièce basculante.

Suivant un mode de réalisation préféré de l'invention, grâce auquel la liaison de la pièce basculante avec la ou les tiges du plateau extracteur est positive, sure et fiable tout en possédant une liberté remarquable de désolidarisation, l'entrée du ou de chacun des paliers de la pièce basculante est constituée par un rétrécissement du rtour du logement, ce rétrécissement étant délimité par deux becs déformables élastiquement et situés dans un plan sensiblement parallèle à celui passant par les surfaces de contact du palier considéré, opposées au chant arrondi et à la face d'appui de façon qu'en exerçant une poussée d'enfoncement de la ou des tiges relativement à la pièce basculante et en la combiant à une poussée de translation de celle-ci sur le couvercle, on provoque suivant le sens de cette translation, l'engagement automatique avec verrouillage élastique du ou des axes dans le ou les paliers ou le dégagement automatique avec déverrouillage élastique de ce ou ces axes de ce ou ces paliers.

Divers autres caractéristques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:

— la figure 1 est une élévation-coupe de la cartouche montrant, en vue synoptique, les composants de celle-ci.

— les figures 2 à 5 sont des coupes partielles analogues à la figure 1, mais prises à plus grande échelle dans un plan perpendiculaire à l'axe de pivotement de la poignée et passant par l'une des tiges du plateau extracteur, ces vues illustrant l'assemblage du dispositif de prise lors du montage de la cartouche.

— la figure 6 est une perspective définissant, en vue synoptique, la forme de la pièce basculante, de la poignée et de la gachette coulissante notamment, ainsi que leurs liaisons.

— la figure 7 est une coupe transversale très agrandie de la pièce basculante faisant ressortir, lors de l'assemblage précité, le cheminement d'un axe de tige extractrice dans le logement correspondant — et son palier — de ladite pièce.

— la figure 8 est une vue en plan de dessus du plateau extracteeur équipé de ses tiges, axes, ressorts et coupelles.

— la figure 9 est une élévation-coupe prise suivant la ligne IX-IX de la figure 8.

— les figures 10, 11 et 13 sont des coupes partielles prises suivant la ligne X-X de la figure 6 en travers du poussoir de verrouillage et la figure 12 une coupe partielle prise suivant la ligne XII-XII de cette figure 6 en travers d'un élément de guidage de la gâchette, ces coupes illustrant, par des positions successives de la poignée, le relevage de celle-ci pour le transport de la cartouche dans son ensemble.

— les figures 14, 15, 17 et 18 sont des coupes partielles prises suivant le ligne X-X de la figure 6 en travers du poussoir de verrouillage et la figure 16 une coupe partielle prise suivant la ligne XII-XII de la figure 6 en travers d'un élément de guidage de la gachette, ces coupes montrant, pour des positions successives de la poignée, le relevage de la poignée pour l'extraction du disque et le transport de la cartouche sans son boîtier.

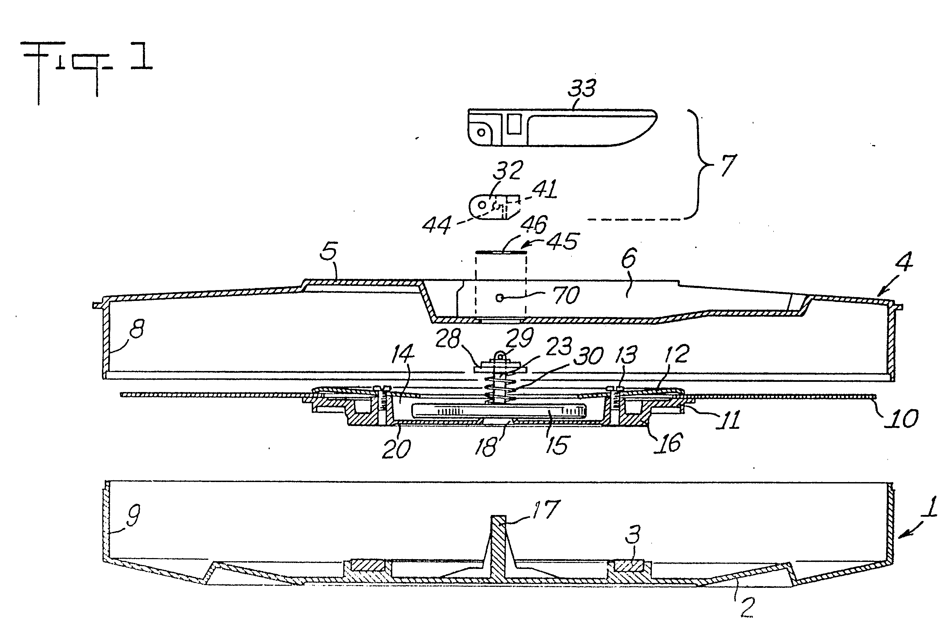

La cartouche comporte, ainsi que cela ressort de la figure 1, un boîtier 1 dont le fond profilé 2 est muni d'une couronne aimantée centrale 3 ou éventuellement de pastilles aimantées réparties de façon équiangle et équipolaire dans cette zone centrale. Elle comporte également un couvercle 4 dont le dessus 5 délimite un évidement 6 pour le logement de la partie apparente du dispositif de prise 7 selon l'invention, décrit dans ce qui suit. Le couvercle 4 est solidaire d'une jupe annulaire 8 normalement emboîtée pour son centrage dans la paroi périphérique tubulaire 9 du boîtier 1 sur le chant supérieur de laquelle repose le rebord marginal du couvercle 4.

La cartouche comporte en outre un disque magnétique 10, de forme coronale, destiné à stocker des données. Le disque est emprisonné, dans sa partie centrale, entre un plateau inférieur de verrouillage 11 et un plateau supérieur de serrage 12, ce dernier étant déformable élastiquement et relié au précédent par des vis 13. Une chambre centrale 14 délimitée par ces plateaux contient un plateau extracteur 15 qui se trouve prisonnier librement et avec un jeu axial appréciable.

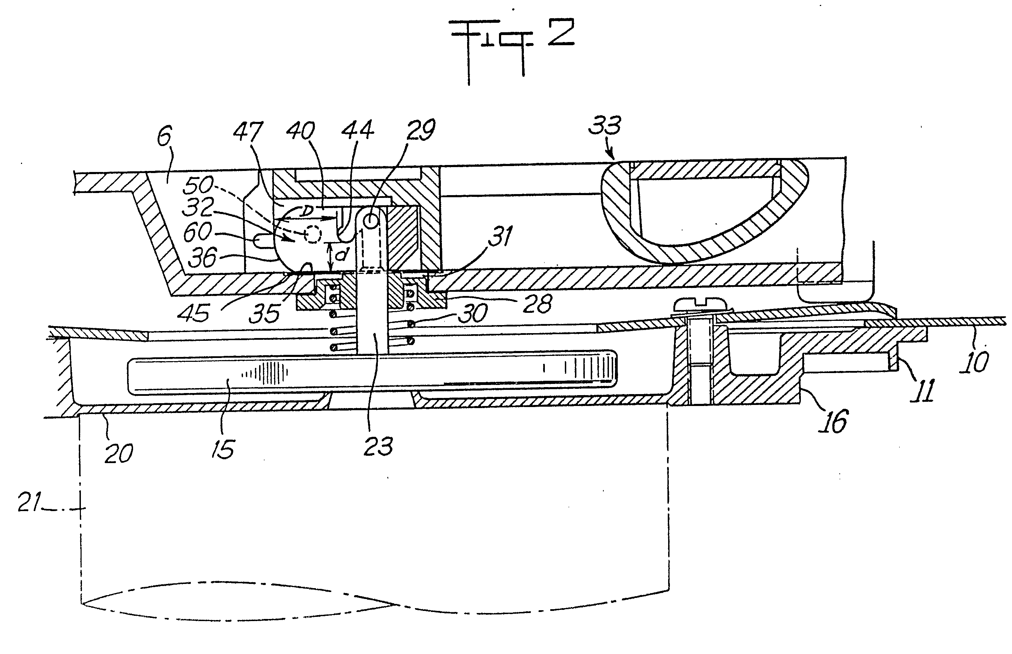

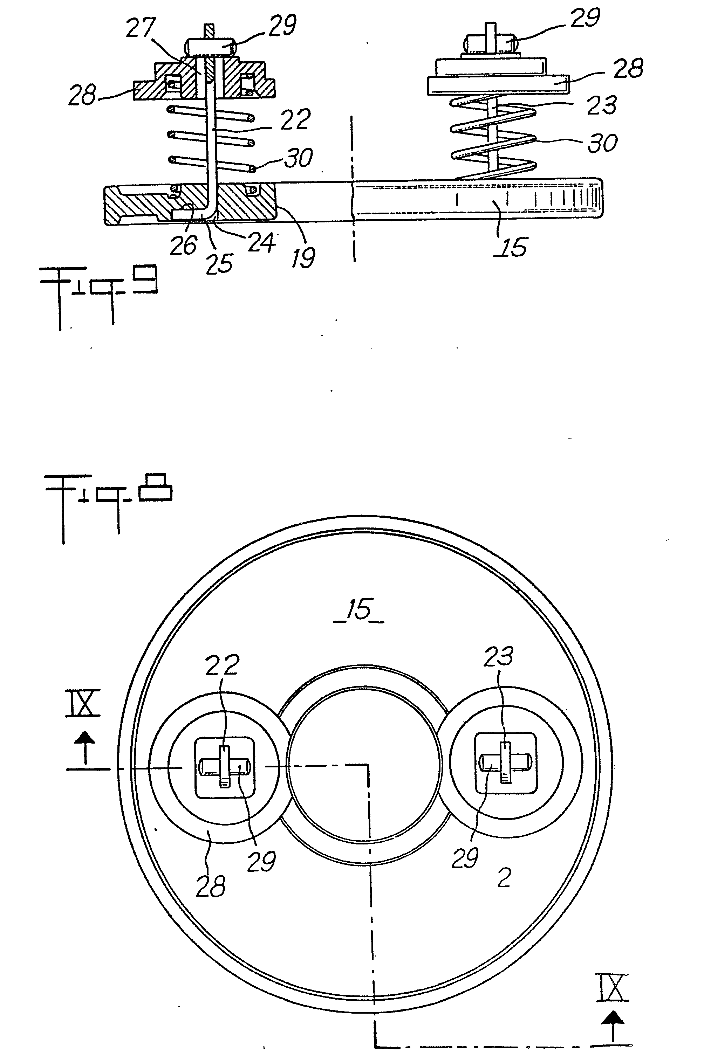

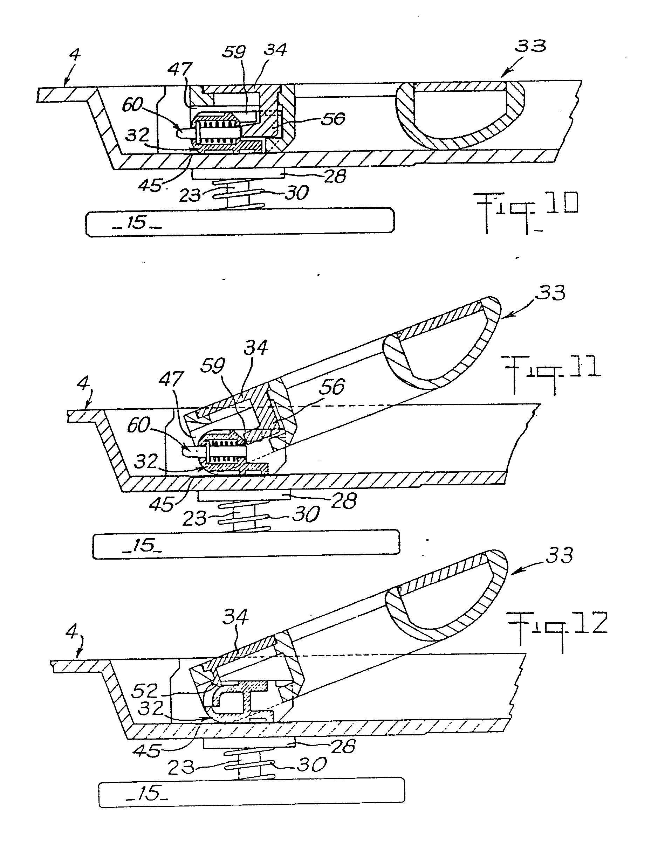

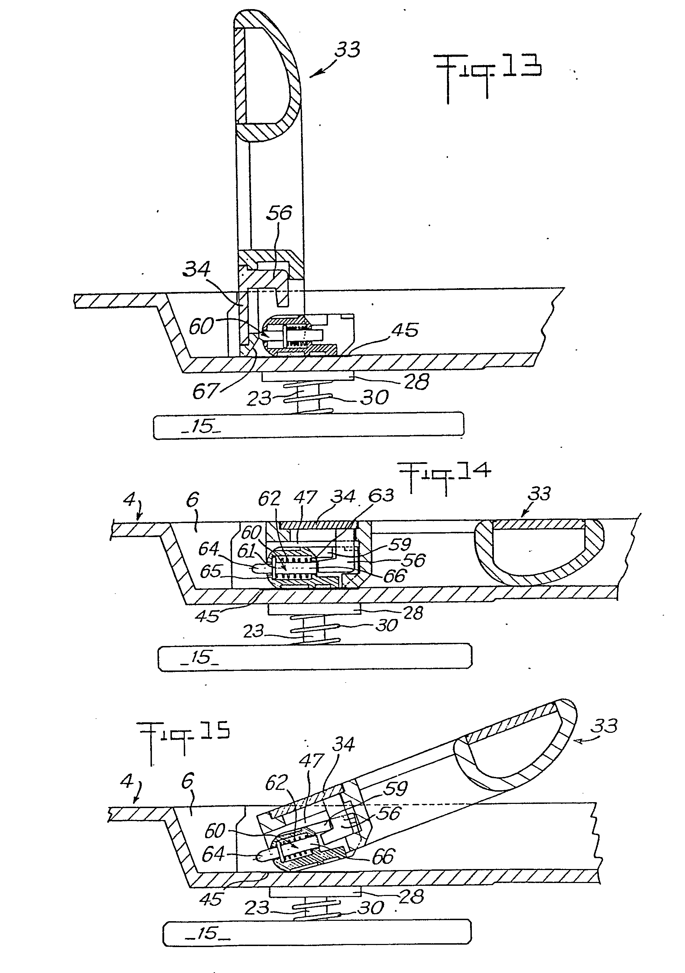

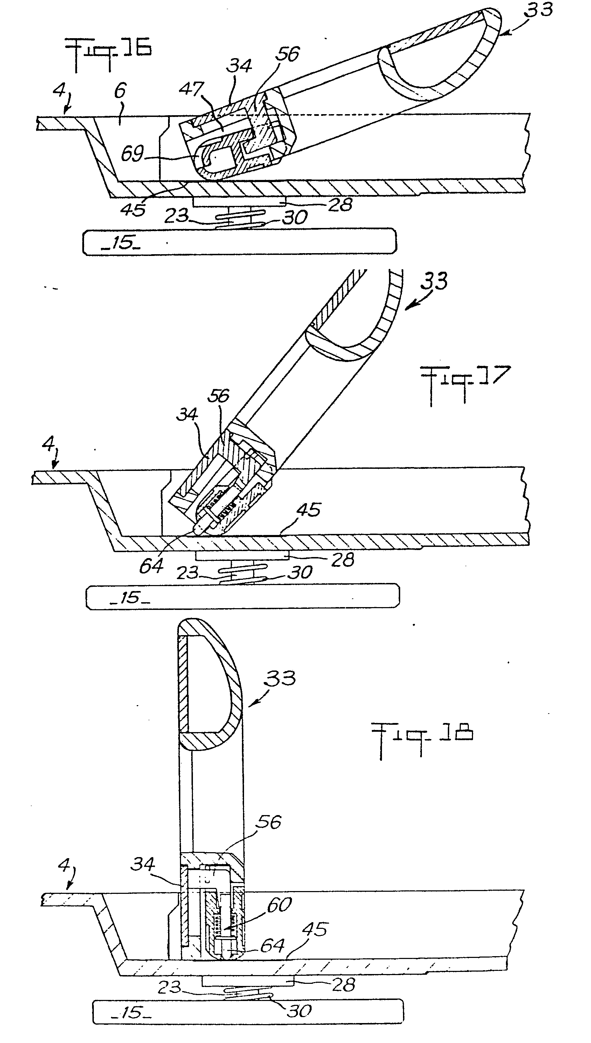

, Le plateau inférieur de verrouillage 11 présente une couronne saillante 16 susceptible de coopérer avec le ou les aiments 3 pour assurer la solidairsation de l'équipage mobile portant le disque 10 avec le boîtier 1. D'ailleurs, le fond 2 de celui-ci est muni d'un doigt de centrage 17 qui traverse normalement un orifice 18 de la couronne 16 de solidarisation (figure 1) et un autre orifice 19 du plateau extracteur 15 (figures 8 et 9). De plus, la couronne 16 est creusée pour délimiter un embrèvement 20 pour le positionnement d'un tas 21 (figure 2) utilisé, ainsi que cela est exposé dans ce qui suit, pour démonter et remonter le dispositif de prise.

Ce dispositif de prise, aux fonctions multiples, coopère avec le plateau extracteur 15, qui comme le montrent les figures 8 et 9, est muni de deux tiges méplates 22 et 23, Chaque tige traverse une lumière de guidage 24 ménagée dans ce plateau et son extrémité recourbée 25 est noyée dans un évidement 26 permettant de définir sa position. L'extrémité libre supérieure de la tige considérée traverse un passage 27 délimité par une coupelle épaulée 28 et est rendue solidaire, au delà, par emmanchement à force, d'un axe 29 faisant saillie des deux côtés. Un ressort 30 est interposé entre le plateau extracteur 15 et ladite coupelle 28 dans lesquels des rainures circulaires de centrage sont creusées. Le ressort 30 tend à appliquer cette coupelle, lorsque l'équipage mobile contenant le disque 10 est démonté (figure 1) et même lorsque le plateau extracteur 15 est déboîté (figure 9), contre l'axe 29 et, lorsque cet équipage est attelé au couvercle 4 par le dispositif de prise 7 (figures 2 à 5 et 10 à 18) contre le fond de l'évidement 6 de ce couvercle. Dans cette dernière position, la plus courante d'ailleurs, l'épaulement de la coupelle 28 bute contre ce fond d'évidement 6, alors que la coupelle proprement dite se trouve logée dans un orifice circulaire 31 dudit fond; le ressort est somprimé et l'axe 29 est écarté de ce dernier. Les axes 29 des deux tiges extractrices 22 et 23 assurent le maintien flottant non positif du dispositif de prise 7 décrit dans ce qui suit tant sous l'aspect organique que sous l'aspect fonctionnel.

Ainsi que cela ressort des figures 1 à 7 notamment, le dispositif de prise 7 comporte essentiellement une pièce basculante 32, une poignée de préhension 33 et une gachette coulissante 34.

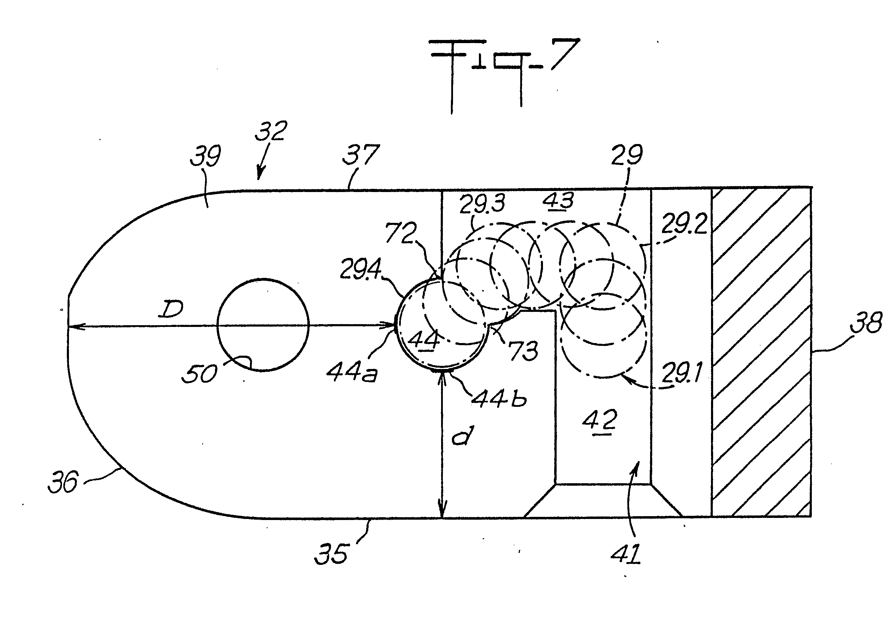

La pièce basculante 32 présente une forme méplate épaisse délimitée par une face d'appui 35, un chant arrondi 36, une face 37 et un chant 38 libres apparents. Cette pièce comporte deux fentes 39 et 40 débouchant sur le chant 36 et prévues pour la mise en place ainsi que le libre débattement des tiges 22 et 23. Chacune des fentes traverse un logement 41 s'étendant de part et d'autre (figure 7) comme l'axe 29 s'étend de part et d'autre de la tige correspondante 22 au 23. Chaque moitié de logement comporte une partie 42 sensiblement perpendiculaire à la face d'appui 35 et débouchant sur les deux faces 35 et 37. Cette partie 42 est prolongée par un retour 43 qui se dirige vers le chant arrondi 36, d'abord tout droit et, ensuite en plongeant vers la face d'appui 35. Le fond extrême 44 de ce retour constitue un palier ouvert. Les deux paliers alignés 44 situés de part et d'autre de la fente 39 ou 40 correspondante sont destinés à recevoir l'axe 29 de la tige conjuguée 22 ou 23. La distance »D« au chant arrondi 36 de la surface de contact 44a opposée des paliers 44 est supérieure à la distance »d« à la face d'appui 35 de la surface de contact 44b opposée des paliers 44.

Le fond de l'évidement 6 ménagé dans le couvercle est doublé par une plaquette métallique 45 (figures 1 à 6) recouvrant les deux orifices 31 et délimitant des fenêtres 46, de forme carrée par exemple, pour le passage des extrémités de tiges 22, 23 et des axes 29. La plaquette 45 constitue un élément rigide d'appui et de glissement pour la pièce basculante 32.

Cette pièce basculante est en effet tirée élastiquement vers le bas par les axes 29 des tiges 22 et 23. Elle peut alors reposer sur la plaquette 45 par sa face d'appui 35 (figure 13) dans la position de portage (la couronne 16 de l'équipage porte-disque 10 étant alors fixée au boîtier 1 par le ou les aimants 3) ou bien par son chant arrondi 36 (figure 18) dans la position d'extraction (le couvercle 4 muni de l'équipage porte-disque 10 étant alors désolidarisé du boîtier 1 du fait que la couronne 16 se trouve écartée du ou desdits aimants 3). C'est d'ailleurs parce que la distance »D« est supérieure à la distance »d« que le passage de la position de portage (figure 13) à la position d'extraction (figure 18) permet de soulever le plateau extracteur 15, donc de rapprocher le disque 10 du couvercle 4 et ainsi d'écarter le plateau de verrouillage 11 en décollant sa couronne 16 du ou des aimants.

Comme le montrent les figures 14 à 18 le passage d'une position extrême à l'autre s'accomplit lors du basculement de la pièce 32 dont les paliers 44 s'élèvent ou s'abaissent en tirant ou en accompagnant les axes 29 dans leur déplacement vertical coincidant avec le déplacement coaxial des tiges 22 et 23, tandis que son chant arrondi 36 glisse sur la plaquette 45. En fait, aucune liaison positive n'est établie entre la pièce basculante 32 et l'une quelconque des parties voisines de la cartouche; il s'agit plutôt d'un montage flottant libre soumis à la seule traction élastique des axes 29 des tiges 22 et 23.

Ainsi que cela est déjà indiqué dans ce qui précède en se référant aux figures 1 à 7, le dispositif de prise 7 comporte également une poignée 33 et une gachette 34.

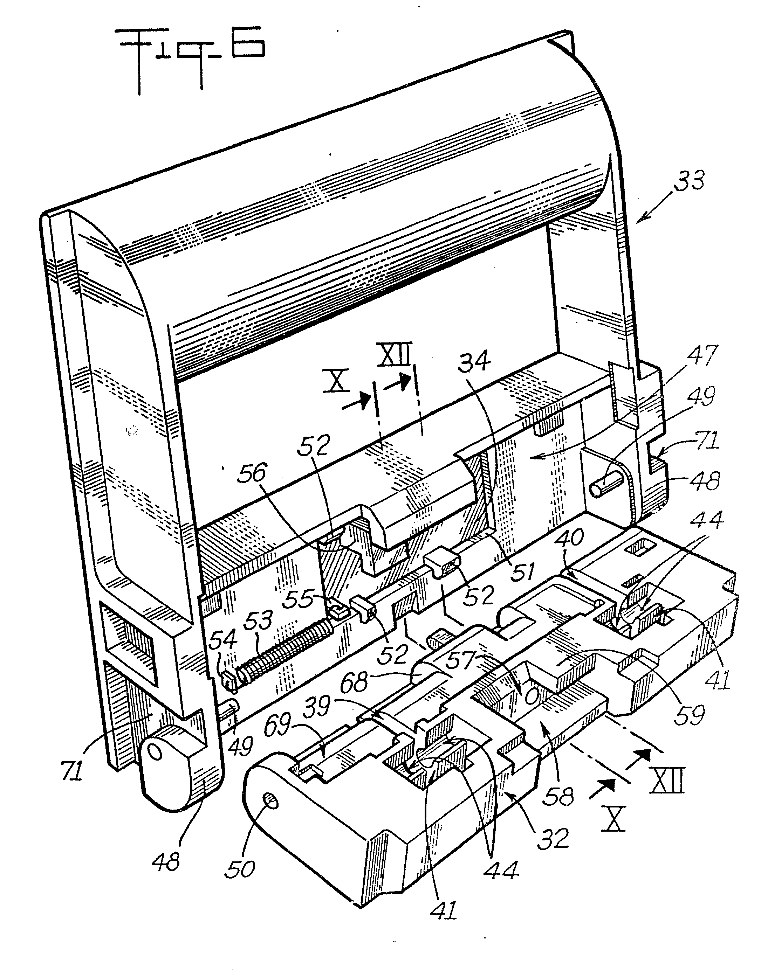

La figure 6 montre clairement que la poignée 33 délimite un dégagement 47 dans lequel peut prendre place la pièce basculante 32 de façon coplanaire (figure 18) ou perpendiculaire (figure 13) pour parvenir aux positions précitées d'extraction et de portage respectivement. Ce dégagement 47 est bordé par deux branches latérales 48 de la poignée qui prennent ladite pièce 32 interposée entre elles; d'ailleurs, ces branches sont montées pivotantes, au moyen d'axes 49 engagés dans des trous 50 de la pièce, par rapport à cette poignée et sans aucune autre liaison avec les parties voisines de la carouche. Les trous 50 se trouvent ménagés dans ladite pièce entre ses paliers 44 d'extraction et son chant arrondi 36 de basculement. Ainsi, lorsque la pièce 32 n'est pas accouplée à la poignée, elle reste à plat par sa face d'appui 35 sur la plaquette 45 et ladite poignée peut pivoter librement, comme si elle était articulée positivement sur le couvercle 4, entrè sa positition d'escamotage (fig. 10) et sa position de préhension (fig. 13). Par contre lorsque la pièce 32 est accouplée à la poignée par des moyens décrits ci-après (figures 14 à 18), ladite poignée ne peut plus pivoter par rapport aux axes 49, mais peut basculer relativement au couvercle 4 par pivoment coulissant du chant arrondi 36 de la pièce 32 dont elle est solidaire, sur la plaquette 45.

Les moyens d'accouplement évoqués cidessus sont commandés par la gachette coulissante 34 et apparaissent très nettement dans leur ensemble sur la figure 6. Cette gachette est constituée par un coulisseau monté en applique sur la poignée et recouvrant, quelle que soit la position qu'il occupe, une fenêtre 51 débouchant dans le dégagement 47; il présente en saillie des crochets de guidage sousjacents 52 coopérant avec les bords transversaux de la fenêtre 51 pour que la gachette puisse être déplacée par le pouce de l'opérateur parallèlement à la ligne d'axes 49.

Un ressort 53 accroché sur des ergots 54 de la poignée et 55 de la gachette tend à rappeler élastiquement ladite gachette vers la position de désaccouplement illustrée par la figure 6 notamment et matérialisée par butée de l'ergot 55 contre un bord de la fenêtre 51. Par ailleurs, la gachette 34 est solidaire d'une patte 56 conformée en cornière et se trouvant, dans la position de désaccouplement précitée, en regard d'une encoche 57 permettant d'accéder à une rainure 58 ménagée dans la pièce basculante 32 sous une contre-patte d'accouplement 59. Lorsque la poignée 33 est rabattue vers la position d'escamotage (figure 10), la patte 56 de sa gachette pénètre dans l'encoche 57 de la pièce basculante 32 et se place en regard de la rainure 58 de celle-ci. Lorsqu'ensuite, cette gachette est déplacée en translation vers la droite de la figure 6 jusqu'à la position d'accouplement (figure 16), sa patte 56 se déplace dans la rainure 58 et s'arrête en regard de la contre-patte 59 de la pièce basculante 32. Si la poignée 33 est alors relevée en maintenant la gachette 34 dans cette position d'accouplement, elle entraîne dans son mouvement (figures 16 à 18) ladite pièce basculante grâce au contact des patte 56 et contre-patte 59.

Bien entendu, il est préférable que la gachette 34 soit verrouillée en position d'accouplement dès que le relevage de la poignée 33 s'amorce et tant qu'il subsiste.

A cet effet et ainsi que cela ressort des figures 6 et 14 à 18, un poussoir 60 est monté coulissant dans la pièce basculante 32 suivant une direction perpendiculaire à la ligne de trous 50 et par conséquent à la translation de la gachette. Le poussoir 60 présente une collerette saillante 61 sur laquelle agit un ressort 62 prenant appui sur un épaulement 63 de la pièce 32. Le ressort tend à faire saillir l'extrémité de commande 64 du poussoir hors du chant arrondi 36 de ladite pièce et jusqu'à ce que la collerette 61 bute contre un autre épaulement 65 de celle-ci. L'extrémité de commande 64 est destinée à coopérer avec la plaquette 45 qui tend à l'effacer lors du relevage de la pièce 32 entraînée par la poignée en raison de l'accouplement réalisé entre elles par la gachette 34. Au cours de cet effacement, l'extrémité de verrouillage 66 du poussoir opposée à la précédente fait saillie dans la rainure 58 de la pièce basculante 32 derrière la patte 56 de la gachette amenée en position d'accouplement. Ainsi, le relevage de la poignée 33 accouplée à la pièce basculante 32 par la gachette 34 s'accompagne d'un verrouillage automatique de cette dernière et donc de la pièce par le poussoir 60.

Par ailluers, il est souhaitable de pouvoir sensibiliser la position de préhension de la poignée 33 désaccouplée de la pièce basculante 32.

Dans ce but et comme le montre la figure 13, l'extrémité de commande 64 de poussoir 60 coopère avec une rampe inclinée 67 formée dans la poignée 33. La rampe permet d'escamoter cette extrémité 64 lors du relevage de ladite poignée et le poussoir 60 presse alors élastiquement sur celle-ci en tendant à la maintenir dans la position relevée.

Enfin, il peut être avantageux dans ce cas où la poignée 33 se trouve en position relevée de préhension et la pièce basculante 32 en position à plat de portage (figure 13), d'immobiliser la gachette 34 en position de désaccouplement (figure 6) afin d'éviter toute fausse manoeuvre avec le pouce lors du rabattement de la poignée.

A cet effet, et si l'on se réfère à la figure 6, le crochet de guidage 52 situé dans le coin inférieur gauche de cette figure peut rencontrer, dans la situation définie ci-dessus, une butée 68 de la pièce 32; cette butée est constituée par l'une des extrémités d'un dégagement 69 (figures 6 et 16) ménagé dans le chant arrondi 36 de ladite pièce pour que le ressort 53 ne gène pas le pivotement relatif entre la poignée et cette pièce.

Pour bien comprenendre l'invention, il est essentiel de considérer avent tout le montage du dispositif de prise sur la carouche, ce qui se trouve illustré par les figures 1 à 7.

Comme le montre la figure 2, l'équipage mobile portant le disque 10 repose, par l'embrèvement 20 de la couronne 16, sur un tas 21.

Le couvercle 4 est alors positionné relativement à cet équipage mobile de façon que les coupelles 28 de celui-ci soient emboîtées dans les orifices 31 du fond d'évidement 6.

La plaquette métallique 45 est placée sur ce fond en enfilant ses fenêtres 46 sur les tiges 22 et 23 à axes 29.

L'ensemble constitué par la poignée 33 et la pièce basculante 32 complètement noyées dans le dégagement 46, est ensuite centré par rapport aux dites tiges de façon que celles-ci et leurs exes pénètrent sans aucune difficulté dans les parties ascendantes 42 des logements 41 de ladite pièce basculante.

Bien entendu, un tel centrage serait relativement délicat en raison de l'invisibilité s'il n'était prévu un moyen pour le vaciliter. Ce moyen est visible sur les figures 1 et 6; il consiste à prévoir un ergot de centrage 70 faisant saillie dans l'évidement 6 du couvercle sur chacun de ses flancs (figure 1); ces deux ergots sont alignés parallèlement à la ligne d'axes 50; ils coopèrent avec des rainures 71, profilées en équerre, ménagés en creux dans les branches latérales 48 de la poignée et débouchant sur les extrémités de celles-ci; un jeu suffisant est ménagé entre les ergots 70 et les rainures 71 de façon à permettre le centrage mais à ne pas s'opposer au mouvement de pivotement pur ou de basculement de la poignée.

L'ensemble 32—33 étant centré par rapport au couvercle 4, les tiges d'extraction 22 et 23 s'étendent dans les parties 42 des logements 41 de la pièce basculante 32 de telle façon que les axes 29 de ces tiges se trouvent au niveau 29.1 (figure 7).

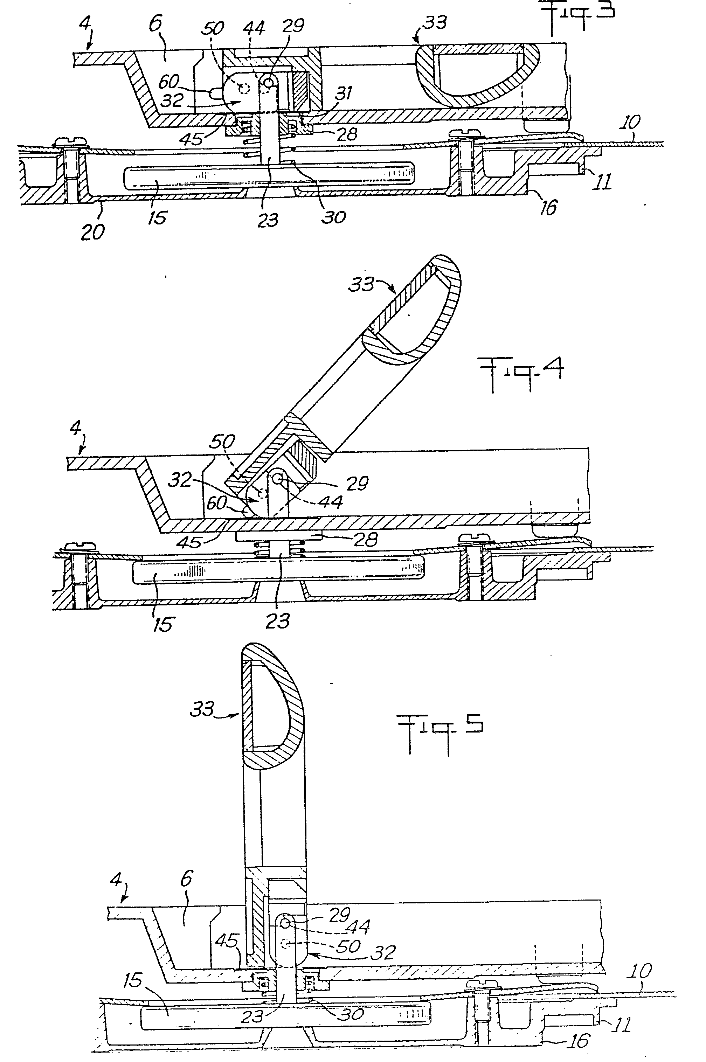

Une pression est alors exercée sur l'ensemble 32—33 pour que les ressorts 30 soient comprimés et qu'ainsi les axes 29 parviennent dans les logements 41 au niveau supérieur 29.2 (figure 7) correspondant à celui des retours 43 desdits logements. Les différents éléments constitutifs du dispositif de prise occupent alors les positions relatives illustrées par la figure 2. Puis une translation de l'ensemble 32, 33 est réalisée relativement au couvercle 4 de façon que lesdits axes 29 parcourent les retours 43 de la position 29.2 vers la position 29.3 (figure 7), les différents éléments constitutifs du dispositif de prise se trouvant maintenant dans la position représentée sur la figure 3.

A ce stade de l'exposé, il est très important de remarquer que chaque retour 43 présente, ainsi que cela ressort clairement de la figure 7, dans sa partie descendante un rétrécissement défini par deux becs 72 et 73 déformables élastiquement; ces becs délimitent les paliers 44 précités. D'une façon avantageuse, la pièce basculante 32 est constituée par une matière plastique qui, en raison de sa nature, confère une èlasticité suffisante aux becs 72 et 73. Les axes 29 se trouvant à la position 29.3, l'accouplement de la pièce basculante 32 avec la poignée 33 est alors effectué au moyen de la gachette 34 et le relevage de ladite poignée est commandé concomitamment pour que la pièce basculante 32 se redresse en prenant appui par son chant 36 sur la plaquette 45 et provoque la pénétration des axes 29 dans les paliers 44 en forçant les becs 72 et 73 à la manière d'un clipage, les axes s'acheminant alors entre la position 29.3 et la position 29.4 (figure 7). Les éléments constitutifs de l'élément de prise occupent les positions successives relatives illustrées par les figures 4 et 5.

Pour démonter le dispositif de prise, les opérations précitées doivent être effectuées dans un déroulement inverse en sachant cependant que le rabattement de la poignée 33 n'a aucun effet. L'équipage mobile portant le disque 10 étant accroché au dispositif de prise 7 noyé dans l'évidement 6 du couvercle 4 et la couronne 16 étant posée sur le tas 21, il suffit d'exercer sur la poignée 33 une pression suffisante pour comprimer les ressorts 30 et dégager les axes 29 des paliers 44 en forçant élastiquement les becs 72 et 73. Cette pression vers le bas doit s'accompagner d'une translation de la poignée vers le fond de l'évidement et d'un relachement de l'effort, auquel cas les axes 29 cheminent de la position 29.4 jusqu'à la position 29.1 en passant par les positions intermédiaires significatives 29.3 et 29.2. Un simple déboîtement de ce dispositif 7 permet de dégager celui-ci des tiges 22 23 à axes 28. En soulevant le couvercle, l'équipage mobile portant le disque 10 se trouve entièrement libéré.

Etant admis que l'invention permet de monter facilement, rapidement, par n'importe qui et sans outil, la cartouche et plus spécialement le dispositif de prise sur celle-ci, il s'agit maintenant de comprendre le fonctionnement de ce dispositif de prise soit pour soulever la cartouche dans son ensemble, soit pour extraire le disque 10 du boîtier 1 (figures 14 à 18).

Pour soulever la cartouche dans son ensemble (figures 10 à 13) l'opérateur s'abstient d'agir sur la gachette 34 afin que la pièce basculante 32 reste désaccouplée de la poignée 33 et qu'elle conserve la position illustrée par la figure 10, position dans laquelle la face d'aqui 35 repose sur la plaquette 45, le disque extracteur 15 ne sollicite pas vers le hat l'équipage mobile portant le disque 10 et la couronne 16 de cet équipage adhère magnétiquement à ou aux aimants 3 du boîtier 1. En relevant la poignée 33, tous les éléments constitutifs restent en place (figures 11 et 12) et seule ladite pognée pivote par ses axes 49 dans les trous 50 de la pièce 32 restant fixe. En fin de pivotement (figure 13) la poignée est complètement relevée et sa position est définie de façon sensitive par le poussoir élastique 60.

Pour extraire le disque 10 du boîtier 1 (fig. 14 à 18), l'opérateur pousse sur la gachette 34 afin d'accoupler par sa patte 56 coopérant avec la contre-patte 59 la pièce basculante 32 à la poignée 33. Sans lâcher le poussoir, il relève ladite poignée 33 jusqu'à ce que l'extrémité de commande 64 soit enfoncée par la plaquette 45 et fasse saillir l'extrémité de verrouillage derrière la patte 56 (figures 14 à 17). L'opérateur peut alors libérer la gâchette puisqu'elle se trouve verrouillée en position d'accouplement, mais il doit poursuivre le relevage de la poignée jusqu'à la position verticale de préhension (figure 18).

Au cours de ce relevage dont le détail apparaît sur les figures précitées 14 à 18, la pièce basculante 32 pivote en même temps qu'elle glisse par son chant arrondi 36 sur la plaquette 45, de telle façon que ses paliers 44 élèvent verticalement les axes 29 et tirent vers le haut les tiges 22 et 23, ce qui a pour effet de soulever l'équipage mobile portant le disque 10 relativement au fond 2 du boîtier 1 et ainsi de décoller la couronne 16 du ou des aimants 3.

La poignée étant complètement relevée (figure 18) on peut en la soulevant extraire sans aucune difficulté le disque 10 du boîtier 1.

L'invention n'est pas limitée à la forme de réalisation représentée et décrite en détails car diverses modifications peuvent y être apportées sans sortir de son cadre.

## Revendications

1. Dispositif de prise pour cartouche de disque magnétique comprenant un boîtier (1) et un couvercle (4) entre lesquels est ménagée une cavité contenant le disque magnétique (10) qui est emprisonné dans sa partie centrale entre un plateau de serrage (12) et un plateau de verrouillage (11) coopérant avec au moins un aimant permanent (3) porté par le fond (2) du boîtier, un plateau extracteur (15) étant logé avec un jeu axial suffisant dans une chambre (14) ménagée entre le plateau de verrouillage (11) et le plateau extracteur (15), ce plateau extracteur étant relié par au moins une tige (22, 23) à un mécanisme comprenant une pièce montée pivotante (32) dans une poignée (33) à laquelle elle est susceptible d'être reliée par une gâchette (34) montée coulissante dans ladite poignée et permettant de mettre ledit mécanisme en position d'escamotage et en position de préhension, caractérisé:

— en ce que la pièce (32) est basculante et en appui élastique sur le couvercle (4) contre lequel elle repose librement par l'une de ses faces (35) dans la position fermée de portage et par son chant arrondi (36) formant pivot coulissant dans la position ouverte d'extraction, la poignée ne s'appuyant pas sur ledit couvercle,

— en ce que la ou chacune des tiges (22, 23), guidée en translation sensiblement coaxiale à travers le couvercle, présente en saillie latérale au moins un axe (29) situé au-dessus de ce couvercle et dans un logement (41) ménagé dans la pièce basculante en débouchant dans une fente (39, 40) de celle-ci prévue pour le libre débattement relatif de la tige considérée lors du basculement de ladite pièce.

— en ce que le logement présente une partie (42) sensiblement perpendiculaire à la face d'appui (35) de la pièce basculante et prolongée par un retour (43) en forme de crochet dont le fond extrême (44) constitue un palier ouvert pour l'axe (29) de tige considéré, la distance »D« au chant arrondi de la surface de contact du palier opposée étant supérieure à la distance »d« à la face d'appui de la surface de contact du palier opposée d'une grandeur suffisante pour décoller le plateau de verrouillage (11) relativement au ou aux aimants(3).

— et en ce qu'au moins un ressort (30) interposé entre le couvercle (4) et le plateau extracteuer (11) pour tendre à les écarter, maintient élastiquement le ou les axes de tige dans le ou les paliers précités de la pièce basculante.

2. Dispositif selon la revendication 1, caractérisé en ce que l'entrée du ou de chacun des paliers (44) de la pièce basculante (32) est constituée par un rétrécissement du retour du logement, ce rétrécissement étant délimité par deux becs (72, 73) déformables élastiquement et situés dans un plan sensiblement parallèle à celui passant par les surfaces de contact du pallier considéré opposées au chant arrondi et à la face d'appui, de façon qu'en exerçant une poussée d'enfoncement de la ou des tiges relativement à la pièce basculante et en la combinant à une poussée de translation de celle-ci sur le couvercle, on provoque suivant le sens de cette translation, l'engagement automatique avec verrouillage élastique du ou des axes le ou les paliers ou le dégagement automatique avec déverrouillage élastique de ce ou ces axes hors de ce ou ces paliers.

3. Dispositif selon la revendication 1 ou 2, caractérisé en ce que la pièce basculante (32) est en matière plastique et coopère avec une plaquette d'appui métallique (45) reposant sur le couvercle (4).

4. Dispositif selon la revendication 1 ou 2, dont le plateau extracteur (15) est attelé à deux tiges (22, 23) traversant chacune un ressort (30) interposé entre le plateau extracteur et le couvercle (4) caractérisé en ce que chaque tige est méplate et en ce que son extrémité libre s'étandant à l'extérieur du couvercle du côté de la pièce basculante est munie d'un axe perpendiculaire (29) faisant saillie des deux côtés pour coopérer avec les deux paliers (44) de deux logements (41) ménagés dans la pièce basculante de part et d'autre de la fente prévue pour le passage de la tige méplate considérée.

5. Dispositif selon la revendication 4 caractérisé en ce que chaque ressort (30) est interposé entre le plateau extracteur (15) et une coupelle intermédiaire (28) prenant appui normalement sur le couvercle (4) et, lorsque la cartouche est démontée, sur l'axe (29) pour que ce plateau extracteur forme avec ses accessoires un sous-ensemble équipé.

6. Dispositif selon l'une quelconque des revendications 1 à 5, caractérisé en ce que la poignée précitée (33) est montée pivotante (en 49, 50) par rapport à la pièce basculante sans prendre appui sur le couvercle.

7. Dispositif selon la revendication 6, caractérisé en ce que les flancs d'un évidement (6) du couvercle prévu pour l'escamotage de la poignée, sont solidaires chacun d'un ergot de centrage (70) coopérant avec une rainure conjuguée (71) ménagée dans le flanc correspondant de cette poignée, pour favoriser le centrage de la pièce basculante relativement aux tiges lors du montage de ce dispositif.

8. Dispositif selon l'une quelconque des revendications 1 à 7, dont la gachette coulissante (34) est guidée en translation relativement à la poignée, parallèlement à son axe de pivotement et est reliée à un ressort de rappel (53) la ramenant vers la position de désaccouplement caractérisé en ce que cette gachette est solidaire d'une patte (56) qui, dans cette position, est située en regard d'une encoche (57) de la pièce basculante (32) et, dans la position d'accouplement éloignée en translation de la précédente, coopère par contact avec une contre-patte (59) de ladite pièce basculante afin que la poignée (33) puisse commander le pivotement de celle-ci.

9. Dispositif selon la revendication 8, caractérisé en ce que la pièce basculante (32) porte un poussoir (60) monté coulissant dans une direction perpendiculaire à la translation de la gachette et soumis à un ressort (62) tendant à escamoter son extrémité de verrouillage (66) hors du passage de ladite gachette (34) et à faire saillir son extrémité de commande (64) hors du chant arrondi (36) de cette pièce pour qu'elle puisse coopérer avec le couvercle (4) ou sa plaquette (45) lors du pivotement de ladite pièce afin de bloquer, par son extrémité de verrouillage (66) qui vient se placer derrière la patte (56) de la gachette (34), cette gachette en position d'accouplement.

10. Dispositif selon la revendication 9, caractérisé en ce que l'extrémité de commande (64) du poussoir (60) coopère également avec la poignée (33) afin de maintenir élastiquement celle-ci en position de préhension lorsque la pièce basculante est en position de désaccouplement.

11. Dispositif selon la revendication 8, ou la gachette (34) est solidaire d'un ergot de verrouillage (52), caractérisé en ce que cet ergot coopère en position de désaccouplement avec une butée (68) de la pièce basculante (32) lorsque celle-ci repose par sa face d'appui (35) sur le couvercle (4) ou sa plaquette (45) et que la poignée (33) est relevée en position de préhension.

**Patentansprüche**

1. Vorrichtung zum Fassen einer Magnetplattenkartusche, mit einer Kassette (1) und einem Deckel (4), zwischen denen ein die Magnetplatte (10) enthaltender Hohlraum vorgesehen ist, welche Magnetplatte in ihrem Mittelteil zwischen einer Klemmplatte (12) und einer Verriegelungsplatte (11), zusammenwirkend mit zumindest einem vom Boden (2) der Kassette getragenen Permanentmagneten (3), eingeschlossen ist, einer Extraktorplatte (15), die mit ausreichendem axialem Spiel in einer zwischen der Verriegelungsplatte (11) und der Extraktorplatte (15) vorgesehenen Kammer (14) angeordnet ist, wobei die Extraktorplatte durch zumindest eine Stange (22, 23) mit einem Mechanismus verbunden ist, welcher ein schwenkbar in einem Handgriff (33) gelagertes Stück (32) umfaßt, mit dem er durch einen Drücker (34) verbindbar ist, der im Handgriff gleitend gelagert ist und mittels welchem der Mechanismus in Einziehstellung und in Freifstellung bringbar ist, dadurch gekennzeichnet,

— daß das Stück (32) kippbar ist und sich auf dem Deckel (4) elastisch abstützt, auf dem es mit einer seiner Flächen (35) in der geschlossenen Tragstellung und mit seiner einen gleitenden Schwenkzapfen bildenden, abgerundeten Kante (36) in der offenen Extraktionsstellung frei ruht, wobei der Handgriff nicht am Deckel abgestützt ist,

— daß die bzw. jede Stange (22, 23), die quer durch den Deckel in im wesentlichen koaxialer Richtung verschiebbar geführt ist, seitlich auskragend zumindest eine Achse (29) aufweist, die sich oberhalb des Deckels in einer Aufnahme (41) befindet, welche im Kippstück vorgesehen ist und in einen Schlitz (39, 40) desselben mündet, der zur freien Relativbewegung der betreffenden Stange beim Kippen des Stückes vorgesehen ist,

— daß die Aufnahme einen im wesentlichen senkrecht zur Stützfläche (35) des Kippstükkes verlaufenden Teil (42) aufweist, der durch einen hakenförmigen Rücklauf (43) verlängert ist, dessen Endboden (44) ein offenes Lager für die Achse (29) der betreffenden Stange bildet, wobei der Abstand »D« zur abgerundeten Kante der Berührungsfläche des gegenüberliegenden Lagers größer ist als der Abstand »d« zur Stützfläche der Berührungsfläche des gegenüberliegenden Lagers, u. zw. um einen Wert, der zum Abheben der Verriegelungsplatte (11) vom bzw. von den Magnet(en) (3) ausreicht,

— und daß zumindest eine zwischen dem Deckel (4) und der Extraktorplatte (15) zwecks Auseinanderdrückens derselben eingesetzte Feder (30) die Achse(n) der Stange(n) im bzw. in den vorgenannten Lager(n) des Kippstücks elastisch hält.

2. Vorrichtung nach Anspruch 1, dadurch gekennzeichnet, daß der Eingang des Lagers bzw. jedes der Lager (44) des Kippstücks (32) durch eine Verengung des Rücklaufs der Aufnahme gebildet ist, welche Verengung durch zwei elastisch verformbare und in einer im wesentlichen parallel zu derselben durch die Berührungsflächen des betreffenden Lagers gegenüber der abgerundeten Kante und der Stützfläche verlaufenden Ebene vorgesehene Schnäbel (72, 73) begrenzt ist, so daß bei Ausüben eines Druckes der Stange(n) in die Tiefe gegenüber dem Kippstück und bei gleichzeitigem Verschiebedruck desselben auf dem Deckel in Richtung dieser Verschiebung das automatische Eingreifen mit elastischer Verriegelung der Achse(n) im bzw. in den Lager(n) oder das automatische Ausklinken mit elastischer Entriegelung dieser Achse(n) aus diesem bzw. diesen Lager(n) bewirkt wird.

3. Vorrichtung nach Anspruch 1 oder 2, dadurch gekennzeichnet, daß das Kippstück (32) aus Kunststoffmaterial hergestellt ist und mit einem auf dem Deckel (4) ruhenden Stützplättchen (45) aus Metall zusammenwirkt.

4. Vorrichtung nach Anspruch 1 oder 2, bei der die Extraktorplatte (15) an zwei Stangen (22, 23) gekuppelt ist, welche jeweils eine zwischen die Extraktorplatte und den Deckel eingesetzte Feder (30) durchsetzen, dadurch gekennzeichnet, daß jede Stange abgeflacht ist und ihr freies, außerhalb des Deckels auf der Seite des Kippstücks verlaufendes Ende mit einer rechtwinkeligen Achse (29) versehen ist, die zwecks Zusammenwirkens mit den zwei Lagern (44) der zwei auf beiden Seiten des zum Durchlassen der betreffenden abgeflachten Stange vorgesehenen Schlitzes angeordneten Aufnahmen (41) auf beiden Seiten auskragt.

5. Vorrichtung nach Anspruch 4, dadurch gekennzeichnet, daß jede Feder (30) zwischen der Extraktorplatte (15) und einem Zwischenteller (28) angeordnet ist, der sich normalerweise auf dem Deckel (4) und, wenn die Kartusche ausgebaut ist, auf der Achse (29) abstützt, so daß die Extraktorplatte eine mit ihren zugehörigen Teilen ausgestattete Subeinheit bildet.

6. Vorrichtung nach einem der Ansprüche 1 bis 5, dadurch gekennzeichnet, daß der Handgriff (33) gegenüber dem Kippstück schwenkbar gelagert ist (in 49, 50), ohne sich auf dem Deckel abzustützen.

7. Vorrichtung nach Anspruch 6, dadurch gekennzeichnet, daß die Flanken einer zum Versenken des Handgriffs vorgesehenen Ausnehmungen (6) des Deckels jeweils mit einem Zentrierstift (70) verbunden sind, der mit einer in der jeweiligen Flanke dieses Handgriffs vorgesehenen zugehörigen Rille (71) für eine leichtere Zentrierung des Kippstücks gegenüber den Stangen bei der Montage der Vorrichtung zusammenwirkt.

8. Vorrichtung nach einem der Ansprüche 1 bis 7, bei der der gleitende Drücker (34) gegenüber dem Handgriff parallel zu seiner Schwenkachse verschiebbar geführt ist und mit einer dieser in die Entkupplungsstellung bringenden Rückholfeder (53) verbunden ist, dadurch gekennzeichnet, daß dieser Drücker mit einer Pratze (56) verbunden ist, die in dieser Stellung gegenüber einer Kerbe (57) des Kippstücks (32) angeordnet ist und in der in eine Entfernung von letzterem verschobenen Kupplungsstellung zur Steuerung der Schwenkbewegung desselben durch den Handgriff (33) mit einer Gegenpratze (59) des Kippstücks durch Berührung zusammenwirkt.

9. Vorrichtung nach Anspruch 8, dadurch gekennzeichnet, daß das Kippstück (32) einen Stößel (60) trägt, der in Richtung senkrecht zur Verschieberichtung des Drückers gleitend gelagert und einer Feder (62) unterworfen ist, die sein Verriegelungsende (66) aus dem Durchlaß des Drückers (34) zu drücken tendiert und sein Steuerende (64) aus der abgerundeten Kante (36) dieses Stücks vorstehen zu lassen tendiert, damit dieses mit dem Deckel (4) oder seinem Plättchen (45) beim Kippen des Stücks zwecks Blockierung des Drückers in der Kupplungsstellung mit seinem Verriegelungsende (66), das hinter der Pratze (56) des Drückers (34) zu liegen kommt, zusammenwirken kann.

10. Vorrichtung nach Anspruch 9, dadurch gekennzeichnet, daß das Steuerende (64) des Stößels (60) ebenfalls mit dem Handgriff (33) zusammenwirkt, damit dieser elastisch in der Greifstellung gehalten wird, wenn sich das Kippstück in Entkupplungsstellung befindet.

11. Vorrichtung nach Anspruch 8, bei der der Drücker (34) mit einem Verriegelungsstift (52) verbunden ist, dadurch gekennzeichnet, daß dieser Verriegelungsstift in der Entkupplungsstellung mit einem Anschlag (68) des Kippstücks (32) zusammenwirkt, wenn dieses mit seiner Stützfläche (35) auf dem Deckel (4) oder seinem Plättchen (45) ruht und der Handgriff (33) in die Greifstellung angehoben ist.

## Claims

1. Device for gripping a magnetic disk cartridge comprising a container (1) and a lid (4) between which is arranged a cavity containing the magnetic disk (10) which is imprisoned in its central part between a clamping plate (12) and a locking plate (11) cooperating with at least one permanent magnet (3) provided on the bottom (9) of the container, an extractor plate (15) being housed with sufficient axial clearance inside a chamber (14) provided between the locking plate (11) and the extractor plate (15) and said extractor plate being connected by at least one rod (22, 23) to a mechanism comprising a piece (32) mounted for pivoting inside a handle (33) to which it can be connected by way of a pawl (34) mounted for sliding in said handle and enabling said mechanism to be placed in retracted position and in gripping position, characterized in that:
— the piece (32) is pivotable and in elastic abutment on the lid (4) against which it rests freely by one of its faces (35) in the closed position of support and by its rounded edge (36) forming sliding pivot in the open position for extraction, the handle not resting on said lid,
— the or each rod (22, 23), guided in substantially coaxial translation through the lid, presents in lateral projection at least one spindle (29) located above said lid and inside a housing (41) provided in the pivot piece and issuing in a slot (39, 40) thereof provided for the free relative movement of said rod during the pivoting movement of said piece,
— the housing presents a part (42) which is substantially perpendicular to the bearing face (35) of the pivot piece and extended by a return (43) in the form of a hook whose bottom end (44) constitues an open bearing for the spindle (29) of said rod, the distance »D« to the rounded edge from the opposite contact surface of the bearing being greater than the distance »d« to the bearing face from the opposite contact surface of the bearing by an amount sufficient to detach the locking plate (11) relatively to the or each magnet (3),
— and in that at least one spring (30) interposed between the lid (4) and the extractor plate (11) tending to move them apart, holds the or each rod spindle elastically in the or each bearing of the pivot piece.

2. Device according to claim 1, characterized in that the inlet of the or each bearing (44) of the pivot piece (32) is constituted by a constriction of the return of the housing, this constriction being defined by two noses, (72, 73) which are elastically deformable and located in a plane substantially parallel to that passing through the contact surfaces of said bearing opposite the rounded edge and the bearing face, so that, by exerting a thrust driving in the or each rod relatively to the pivot piece and by combining it with a translation thrust of the latter on the lid, automatic engagement is caused, with elastic locking, of the or each spindle in the or each bearing, or automatic disengagement, with elastic unlocking of said spindle out said bearing, depending on the direction of said translation.

3. Device according to claim 1 or 2, of which the extractor plate (15) is coupled to two rods (22, 23) each passing through a spring (30) interposed between the extractor plate and the lid, characterized in that each rod is flat and its free and extending outside the lid on the pivot piece side is provided with a perpendicular spindle (29) projecting on both sides to cooperate with the two bearings (44) of two housings (41) provided in the pivot piece on either side of the slot provided for the passage of said flat rod.

5. Device according to claim 4, characterized in that each spring (30) is interposed between the extractor plate (15) and an intermediate cap (28) abutting normally on the lid (4) and, when the cartridge is dismantled, on the spindle (29) so that this extractor plate forms, with its accessories, an equipped sub-assembly.

6. Device according to any one of claims 1 to 5, characterized in that the said handle (33) is mounted for pivoting (in 49, 50) with respect to the pivot piece without abutting on the lid.

7. Device according to claim 6, characterized in that the sides of a recess (6) in the lid provided for retraction of the handle, are each fast with a centering catch (70) cooperating with an associated groove (71) provided in the corresponding side of this handle, to promote centering of the pivot piece relativ ely to the rods during assemly of this device.

8. Device according to any one of claim 1 to 7, of which the sliding pawl (34) is guided in translation relatively to the handele, parallel to its pivot axis and is connected to a return spring (53) returning it towards the position of disconnection, characterized in that said pawl is fast with a lug (56) which, in this position, is located opposite a notch (57) in the pivot piece (32) and, in the position of connection remote in translation from the preceding one, cooperates by contact with a counter-lug (59) of said pivot piece so that the handle (33) can control the pivoting movement of the latter.

9. Device according to claim 8, characterized in that the pivot piece (32) carries a push member (60) mounted for sliding in a direction perpendicular to the translation of the pawl and subjected to a spring (62) tending to retract its locking end (66) out of the passage of said pawl (34) and to cause its control end (64) to project from the rounded edge (36) of this piece so that is can cooperate with the lid (4) or its plate (45) during pivoting of said piece in order to lock the pawl in position of connection by its locking end (66) which is placed behind the lug (56) of the pawl (34).

10. Device according to claim 9, characterized in that the control end (64) of the push element (60) also cooperates with the handle (33) in order to maintain the latter elastically in position for gripping when the pivot piece is in position of disconnection.

11. Device according to claim 8, of which the pawl (34) is fast with a locking catch (52), characterized in that said catch cooperates in position of disconnection with a stop (68) of the pivot piece (32) when the latter rests by its bearing face (35) on the lid (4) or its plate (45) and the handle (33) is raised to a gripping position.

Fig 1

Fig 2

0 044 242

Fig. 3

Fig. 4

Fig. 5

15

Fig. 6

FIG-7

Fig. 9

Fig. 8

_15_

_Fig. 10_

_Fig. 11_

_Fig. 12_

Fig. 13

Fig. 14

Fig. 15

Fig.16

Fig.17

Fig.18